# EUROPEAN PATENT APPLICATION

(11) **EP 3 846 093 A1**
(43) Date of publication of application: **07.07.2021**
(21) Application number: 21150241.4
(22) Date of filing: 05.01.2021
(51) Int. Cl.: G06Q 10/00, G06Q 10/04, G06Q 10/08, G06Q 50/28, G06Q 50/30

(54) **PHYSICAL DISTRIBUTION INFRASTRUCTURE STRUCTURE**

(30) Priority: 06.01.2020 JP 2020000578
(71) Applicant: TOYOTA JIDOSHA KABUSHIKI KAISHA, Toyota-shi, Aichi-ken 471-8571 (JP)
(72) Inventor: KITAHAMA, Kenichi, Toyota-shi, Aichi-ken 471-8571 (JP); MURAKAMI, Ryo, Toyota-shi, Aichi-ken 471-8571 (JP); IIZUKA, Hisashi, Toyota-shi, Aichi-ken 471-8571 (JP); HOSOKAWA, Mitsunori, Toyota-shi, Aichi-ken 471-8571 (JP)
(74) Representative: D Young & Co LLP

(57) **Abstract**

A physical distribution infrastructure structure according to the present disclosure includes a collection and physical distribution yard (10) configured to collect and distribute a cargo exchanged between outside and within a block, at least one unit block (11), an in-block physical distribution path (16) provided to surround a periphery of the unit block (11) in a loop shape, an autonomous transport robot for transporting the cargo by an autonomous operation passing through the in-block phyisical distribution path (16), and at least a part of the in-block physical distribution path (17) being provided at a part in a layer different from a layer for a sidewalk or a roadway, a branch path (17) configured to be accessible to a facility facing an outer periphery of the unit block (11), and a connection physical distribution path (15) configured to connect the collection and physical distribution yard (10) to the in-block physical distribution path (16).

## Description

### BACKGROUND

The present disclosure relates to a physical distribution infrastructure structure. The present disclosure relates to, for example, a physical distribution infrastructure structure for delivering cargos by an autonomous transport robot.

Recently, the distribution volume of cargos has increased due to the expansion of the use of mail order. As the amount of physical distribution increases, the occurrence of traffic congestion caused by vehicles used for physical distribution or the delay of delivery time caused by the traffic congestion has become a problem. In order to address such an problem, an example of a technique related to a physical distribution system for easing such traffic congestion is disclosed in Japanese Unexamined Patent Application Publication No. 2003 -3 00624.

The distribution system disclosed in Japanese Unexamined Patent Application Publication No. 2003-300624 has the following features. The distribution system disclosed in Japanese Unexamined Patent Application Publication No. 2003-300624 has the following features. An underground physical distribution base facility is provided underground of road or a site such as a road in the vicinity of a shopping center. The underground distribution base facility is provided with an underground parking lot in which vehicles can enter and exit from above-ground and a collection and delivery section which collects and delivers cargos. Furthermore, an underground distribution network is provided in the underground of the site of the shopping center, via which network cargos are transported between the underground distribution base facility and the underground part of each terminal collection and delivery section. The underground collection and distribution center is provided with a cargo handling site where cargos are unloaded from and loaded into transport vehicles, an automatic warehouse which temporarily stores cargos, a parking space for carriers, and a parking space for visitors.

### SUMMARY

However, in the physical distribution system disclosed in Japanese Unexamined Patent Application Publication No. 2003-300624, there is a problem that expandability when the area of the town is expanded is low, because it is necessary to construct a huge and complicated underground structure including a parking space in the underground.

The present disclosure has been made in order to solve such a problem. An object of the present disclosure is to enhance the expandability of a physical distribution network when a town is expanded.

An example aspect of the present disclosure is a physical distribution infrastructure structure including: a collection and physical distribution yard configured to collect and distribute a cargo exchanged between outside and within a block; at least one unit block; an in-block physical distribution path provided to surround a periphery of the unit block in a loop shape, an autonomous transport robot for transporting the cargo by an autonomous operation passing through the in-block phyisical distribution path, and at least a part of the in-block physical distribution path being provided at a part in a layer different from a layer for a sidewalk or a roadway; a branch path configured to be accessible to a facility facing an outer periphery of the unit block; and a connection physical distribution path configured to connect the collection and physical distribution yard to the in-block physical distribution path.

Another example aspect of the present disclosure is a physical distribution infrastructure structure including: a collection and physical distribution yard configured to collect and distribute a cargo exchanged between outside and within a block; at least one unit block; an in-block physical distribution path provided to be in contact with at least one side of the unit block, an autonomous transport robot for transporting the cargo by an autonomous operation passing through the in-block phyisical distribution path, and at least a part of the in-block physical distribution path being provided at a part in a layer different from a layer for a sidewalk or a roadway; a branch path configured to be accessible to a facility facing an outer periphery of the unit block; and a connection physical distribution path configured to connect the collection and physical distribution yard to the in-block physical distribution path.

In the physical distribution infrastructure structure according to the present disclosure, at least a part of the periphery of the unit block is provided with a branch path for accessing facilities in the unit block in such a way that the branch path is branched from the in-block physical distribution path. In the physical distribution infrastructure structure according to the present disclosure, the collection and physical distribution yard is provided at a position separated from the block, and the collection and physical distribution yard is connected to the in-block physical distribution path by the connection physical distribution path. With such a structure, in the physical distribution infrastructure structure according to the present disclosure, it is possible to expand the in-block physical distribution network by expanding the block in units of the unit block.

According to the present disclosure, it is possible to provide a physical distribution infrastructure structure with high expandability of a physical distribution network when a town is expanded.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic diagram of a physical distribution infrastructure structure according to a first embodiment;
Fig. 2 is a schematic diagram of a cross-sectional structure of a physical distribution infrastructure structure according to the first embodiment;
Fig. 3 is a diagram for explaining a restriction of a traveling direction of an in-block physical distribution path of the physical distribution infrastructure structure according to the first embodiment;
Fig. 4 is a cross-sectional view for explaining a pipe structure of the in-block physical distribution path of the physical distribution infrastructure structure according to the first embodiment;
Fig. 5 is a diagram for explaining physical distribution in the collection and physical distribution yard and an in-facility yard of the physical distribution infrastructure structure according to the first embodiment;
Fig. 6 is a schematic diagram of a physical distribution infrastructure structure according to a second embodiment; and
Fig. 7 is a schematic diagram of a collection and physical distribution yard according to a third embodiment.

### DESCRIPTION OF EMBODIMENTS

### [First embodiment]

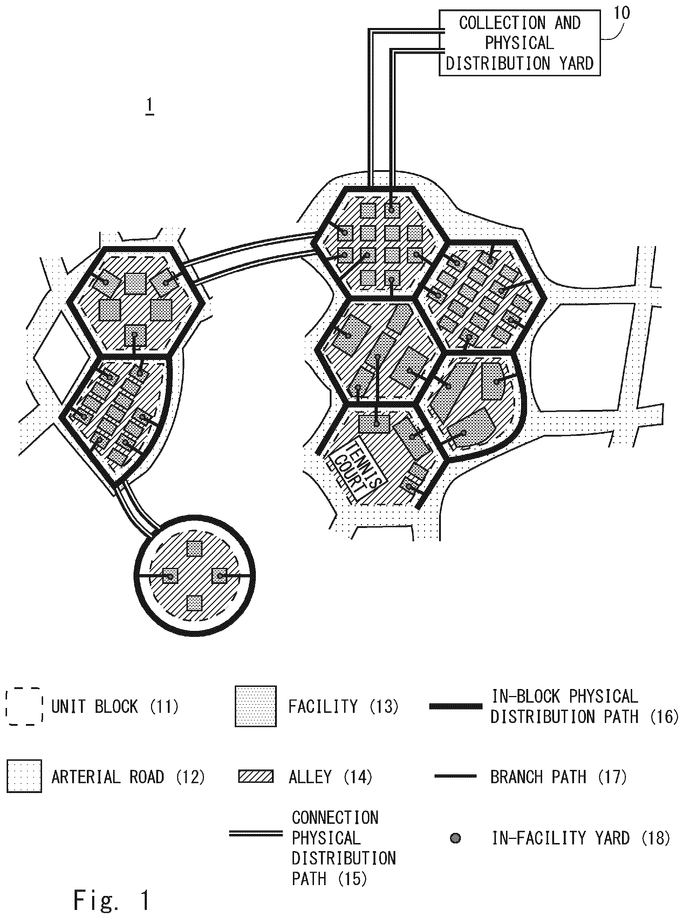

Fig. 1 is a schematic diagram of a physical distribution infrastructure structure 1 according to a first embodiment. As shown in Fig. 1, the physical distribution infrastructure structure 1 according to the first embodiment includes a collection and physical distribution yard 10, unit blocks 11, arterial roads 12, connection physical distribution paths 15, and in-block physical distribution paths 16. The unit block 11 includes facilities 13 and alleys 14. Further, in-facility yards 18 are provided in the facilities 13.

In the example shown in Fig. 1, the unit blocks 11 are arranged in three separate areas. More specifically, in Fig. 1, five unit blocks are arranged in blocks connected to the distribution yard 10 via one connection physical distribution path 15, two unit blocks are arranged in blocks connected to the collection and physical distribution yard 10 via two connection physical distribution paths 15, and one unit block is arranged in a block connected to the collection and physical distribution yard 10 via three connection physical distribution paths 15. Various facilities such as a house, an apartment house, a commercial facility, a factory, a field, a park, an amusement facility such as a tennis court, a parking lot, and the like can be provided inside the unit blocks 11. In the unit block 11, routes between the facilities 13 or the alleys 11 to be routes from the unit block 14 to the arterial road 12 are provided.

When a plurality of unit blocks are arranged in this manner, the arterial roads 11 are provided between the adjacent unit blocks 12. Then, the in-block physical distribution paths 16 are constructed along the arterial road 12. Adjacent unit blocks 11 share one in-block physical distribution path 16. The in-block physical distribution paths 16 are provided at parts where autonomous transport robots for transporting cargos by autonomous operations pass through and at least a part of the in-block physical distribution paths 16 are formed in a layer different from a layer for a sidewalk or a roadway. The in-block physical distribution paths 16 are provided to surround a periphery of the unit block 11 in a loop shape. Further, each of the in-block physical distribution paths 16 may be provided so as to be in contact with at least one side of the unit block 11. In the example shown in Fig. 1, the in-block physical distribution paths 16 surrounding the unit block 11 in a loop shape and the in-block physical distribution paths 16 not surrounding two sides of the unit block 11 are combined to constitute one in-block physical distribution path 16. The in-block physical distribution path 16 has a branch path(s) 17. The in-block physical distribution path 16 is configured to allow access to the in-facility yards 18 provided along the outer periphery of the unit block 11 inside the facility 13 via the branch path 17. Here, each of the facilities 13 provided along the outer periphery of the unit block 11 is a facility 13 that can be reached without the branch path 17 overlapping the part where the other facilities 13 are provided.

Note that although the in-block physical distribution path 16 is a path exclusively used by the autonomous transport robots, it is also possible to allow passage of other self-driving vehicles, which are specially allowed vehicles, in case of an emergency or the like. At this time, the vehicles passing through the in-block physical distribution paths 16 do not need restrictions on their operations for safety measures that are required when a person is in the same space, if they can autonomously operate regardless of whether they are autonomous transport robots or emergency vehicles. Thus, these vehicles can be efficiently operated.

As shown in Fig. 1, in the physical distribution infrastructure structure 1 according to the first embodiment, the collection and physical distribution yard 10 is provided at a position different from the blocks formed by the unit blocks 11. The collection and physical distribution yard 10 is connected to the in-block physical distribution paths 16 by the connection physical distribution paths 15. When the unit blocks 11 are not adjacent to each other and instead are physically separated from each other, the unit blocks 11 in the separated areas are connected to each other by the connection physical distribution paths 15. With such a configuration, the cargos collected from outside the blocks to the collection and physical distribution yard 10 can be individually delivered to each facility in the block through the connection physical distribution paths 15 and the in-block physical distribution paths 16. Further, in the physical distribution infrastructure structure 1 according to the first embodiment, it is possible to directly deliver the cargo from each facility in the block to the collection and physical distribution yard 10. Here, in the physical distribution infrastructure structure 1 according to the first embodiment, the connection physical distribution path 15 and the in-block physical distribution path 16 are configured to be dedicated to the autonomous transport robots in a layer different from a layer for persons and general vehicles on which persons ride.

As described above, since the connection physical distribution paths 15 and the in-block physical distribution paths 16 through which the autonomous transport robots pass are provided in a layer different from a layer on which persons or general vehicles pass, the autonomous transport robot does not come into contact with the person. As a result, it is not necessary for the autonomous transport robot to limit the operation speed or the like in order to take safety measures for persons, and the autonomous transport robot can transport cargos by high speed operations. One of features of the physical distribution infrastructure structure 1 according to the first embodiment is the structure including the in-block physical distribution paths 16 and the physical distribution system using the in-block physical distribution paths 16. Hereinafter, the structure including the in-block physical distribution paths 16 and the physical distribution system using the in-block physical distribution paths 16 will be described in detail.

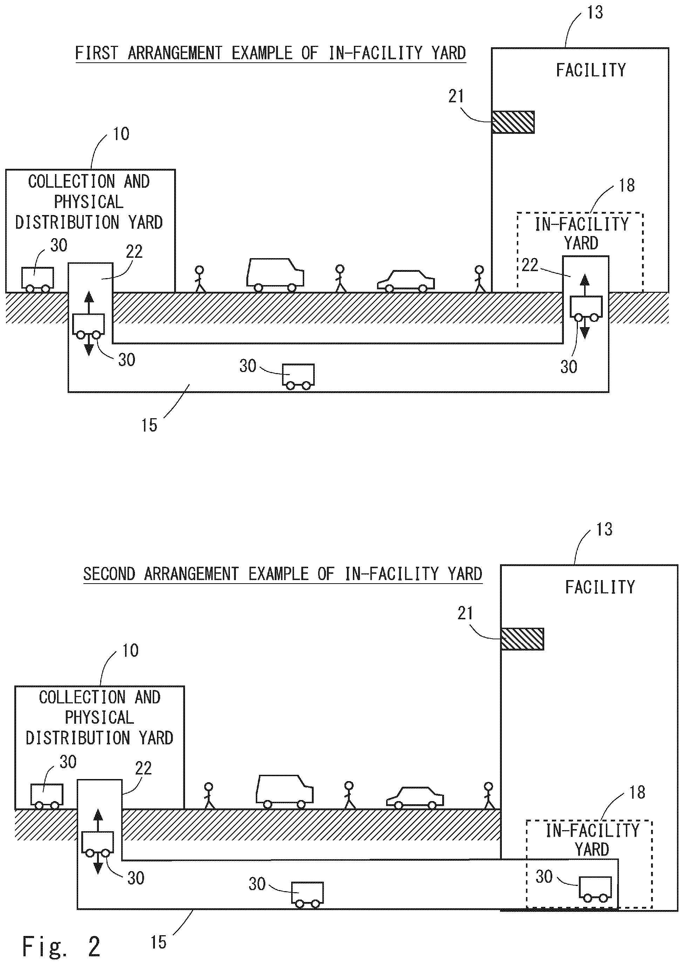

Fig. 2 is a schematic diagram showing a cross-sectional structure of the physical distribution infrastructure structure according to the first embodiment. In Fig. 2, the different layers for the collection and physical distribution yard 10 and the in-facility yard 18 and for the connection physical distribution paths 15 will be mainly described. In Fig. 2, two examples of the layer where the in-facility yard 18 is installed are shown.

As shown in Fig. 2, the connection physical distribution path 15 is provided in the underground which is a layer under the ground where persons or general vehicles move. The collection and physical distribution yard 10 provided on the ground and the connection physical distribution path 15 are connected by elevators 22. Autonomous transport robots 30 move back and forth between the collection and physical distribution yard 10 and the connection physical distribution path 15 through the elevators 22.

As shown in Fig. 2, an end point of the connection physical distribution path 15 is the in-facility yard 18 provided in the facility 13. The in-facility yard 18 is provided in the facility 13 in a layer different from the layer for the connection physical distribution path 15 (e.g., the first arrangement example shown in the upper diagram of Fig. 2) or in the same layer as the layer for the connection physical distribution path 15 (the second arrangement example shown in Fig. 2 below). A delivery destination residence 21 as a residence of a person to be a final destination of the cargo belongs to the facility 13.

Although Fig. 2 shows an example in which the entire connection physical distribution path 15 is formed underground, the connection physical distribution paths 15 may be provided not only underground but also on the ground in a layer different from a layer where persons or general vehicles move around. Although it is also possible to provide some of the connection physical distribution paths 15 and the in-block physical distribution paths 16 on the ground, by providing all of them underground, it is possible to achieve an effect of eliminating the need for countermeasures against rain for the cargos to be transported.

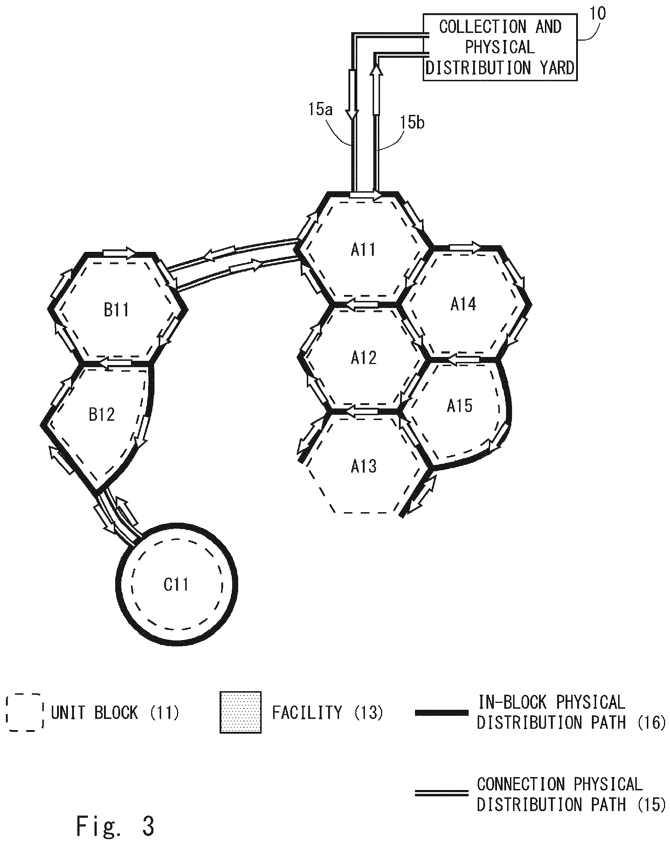

Next, the method of operating the autonomous transport robots 30 in the connection physical distribution paths 15 and the in-block physical distribution paths 16 will be described. Two-way traffic may be allowed to the connection physical distribution paths 15 and the in-block physical distribution paths 16. However, the width of the in-block physical distribution paths 16 can be narrowed by restricting the paths to one-way traffic. Fig. 3 is a diagram for explaining the restriction of the traveling direction of the in-block physical distribution path in the physical distribution infrastructure structure 1 according to the first embodiment.

As shown in Fig. 3, in the physical distribution infrastructure structure 1 according to the first embodiment, the traffic direction is restricted to one-way traffic in a route where the path constructed by the in-block physical distribution paths 16 is formed in a loop shape, and two-way traffic is allowed in a part where the route becomes a deadend.

Fig. 3 will be described in more detail. In the example shown in Fig. 3, the connection physical distribution paths 15 include a first connection physical distribution path 15a through which the autonomous transport robots pass from the collection and physical distribution yard 10 toward the in-block physical distribution path 16, and a second connection physical distribution path 15b through which the autonomous transport robots pass from the in-block physical distribution path 16 toward the collection and physical distribution yard 10.

In the example shown in Fig. 3, the unit blocks connected to the collection and physical distribution yard 10 via one connection physical distribution path 15 are denoted by A11 to A15, the unit blocks connected to the collection and physical distribution yard 10 via two connection physical distribution paths 15 are denoted by B11 and B12, and the unit block connected to the collection and physical distribution yard 10 via three connection physical distribution paths 15 is denoted by C11.

In the example shown in Fig. 3, the operation rules are set as follows. For the part where the in-block physical distribution paths 16 are formed so as to surround the periphery of the unit blocks, the traffic direction is restricted to one-way traffic. Further, two-way traffic is allowed in the part where the in-block physical distribution path 16 becomes a deadend.

By setting the operation rules as described above, in the physical distribution infrastructure structure 1 according to the first embodiment, it is possible to prevent the lowering of the operation efficiency, such as the autonomous transport robots 30 facing each other and swerving from each other in the in-block physical distribution path 16. In the physical distribution infrastructure structure 1 according to the first embodiment, the width of the in-block physical distribution path 16 to which the two-way traffic is applied is the same as the width of the in-block physical distribution path 16 to which the one-way traffic rule is applied. The operation schedule of the autonomous transport robot 30 using a route to which two-way traffic is allowed is adjusted in such a way that this autonomous transport robot 30 will not face another autonomous transport robot 30.

Further, in the physical distribution infrastructure structure 1 according to the first embodiment, when all of the in-block physical distribution paths 16 form a loop shape, the direction in which the autonomous transport robots turn can be restricted to one of right and left. By applying such a restriction, when the autonomous transport robots 30 proceed and face each other, it is possible to prevent the lowering of the operation efficiency such as causing either one of the autonomous transport robots 30 to perform a swerving action.

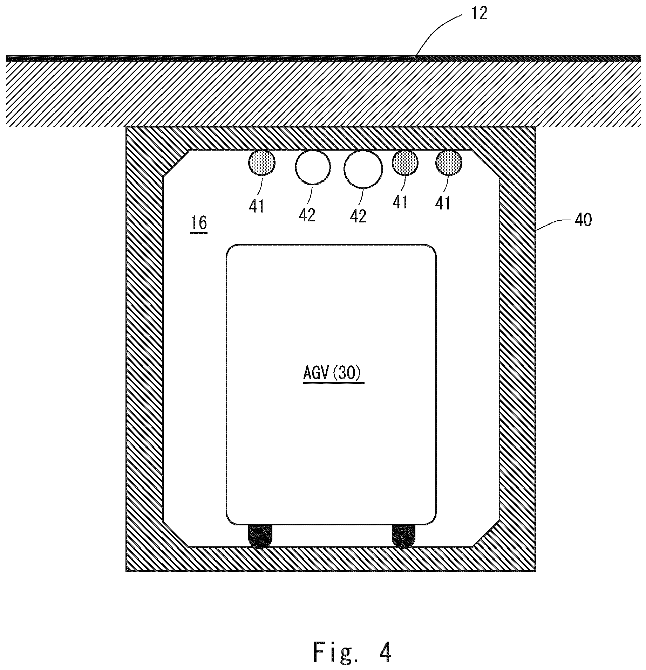

Next, the pipe structure constituting the connection physical distribution path 15 and the in-block physical distribution path 16 will be described. The connection physical distribution path 15 and the in-block physical distribution path 16 do not necessarily need to have a pipe structure if they are on the ground or in a layer above the ground. However, when the connection physical distribution path 15 and the in-block physical distribution path 16 are in the underground, they need to be formed of a pipe structure. Fig. 4 is a cross-sectional view for explaining the pipe structure of the in-block physical distribution path of the physical distribution infrastructure structure according to the first embodiment.

When the connection physical distribution paths 15 and the in-block physical distribution paths 16 have a pipe structure, the pipe structure is formed by combining a plurality of pipe materials (e.g., a box culvert) having the same structure formed based on a certain standard by the precast method. In the example shown in Fig. 4, one cross section of a box culvert 40 is shown. In the physical distribution infrastructure structure 1 according to the first embodiment, the in-block physical distribution path 16 formed in the box culvert 40 serves as a passage for the autonomous transport robots 30. As shown in Fig. 4, in the physical distribution infrastructure structure 1 according to the first embodiment, infrastructure wiring 41 and infrastructure piping 42 are provided in the in-block physical distribution path 16 in the box culvert 40. In this way, the in-block physical distribution path 16 can be used not only as a passage for the autonomous transport robots 30 but also as a part of the infrastructure. The infrastructure wiring 41 may be a power line, a communication line, or the like. The infrastructure piping 42 may be a water supply pipe, a gas pipe, or the like.

As shown in Fig. 4, the box culvert 40 is buried in the underground of the arterial roads 12. With such a structure, when the arterial road 12 is constructed, the work for burying the box culvert 40 is simultaneously carried out, and the construction period and the cost for constructing the in-block physical distribution path 16 can be reduced. Such a structure also achieves excellent maintenability, because the in-block physical distribution path 16 can be replaced as a part of the road construction.

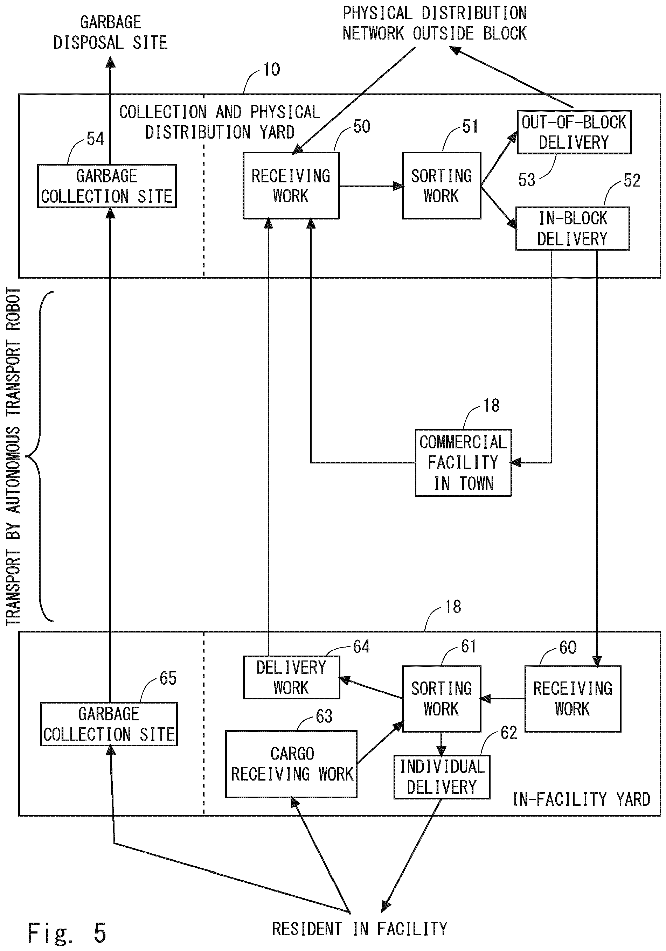

Next, the flow of physical distribution in the physical distribution infrastructure structure 1 according to the first embodiment will be described. Fig. 5 is a diagram for explaining the physical distribution in the collection and physical distribution yard and the in-facility yard of the physical distribution infrastructure structure according to the first embodiment. In Fig. 5, a workspace is provided for each work or process performed in the collection and physical distribution yard 10 and the in-facility yard 18, and the workspace is shown as a component in each yard.

As shown in Fig. 5, the collection and physical distribution yard 10 includes a receiving workspace 50, a sorting workspace 51, an in-block delivery site 52, an out-of-block delivery site 53, and a garbage collection site 54. The in-facility yard 18 includes a receiving workspace 60, a sorting workspace 61, an individual delivery site 62, a cargo receiving workspace 63, a delivery workspace 64, and a garbage collection site 65.

In the physical distribution infrastructure structure 1 according to the first embodiment, first, the cargos are carried into the receiving workspace 50 from a physical distribution network outside the block by a cargo transport vehicle such as a truck. At the receiving workspace 50, the cargos are received from the physical distribution network outside the block and the cargos are handed over to the sorting workspace 51. In the sorting workspace 51, the cargos are stored in containers for each building to which the residence of the person who is the delivery destination belongs. A locker having separate shelves for each residence of the delivery destination may be used in place of the container. When a locker is used, it is only necessary to place the locker in a locker room provided in the in-facility yard 18 of the delivery destination. In this case, a user receives an electronic key or the like from an upper system for controlling the physical distribution infrastructure structure 1, and only by unlocking the shelf designated by the electric key, the cargo can be delivered to the person of the delivery destination.

Then, the containers sorted in the sorting workspace 51 are handed over to the autonomous transport robot 30 operated in the connection physical distribution path 15 and the in-block physical distribution path 16 in the in-block delivery site 52. The autonomous transport robot 30 carries the container to a facility as a delivery destination of the container designated by the upper system. The delivery destination facility includes a public facility such as the in-facility yard 18 or a place other than a residence such as a factory.

In the in-facility yard 18, the container carried by the autonomous transport robot 30 is received at the receiving workspace 60. The container received at the receiving workspace 60 is handed over to the sorting workspace 61, and the cargo in the container is delivered to the individual delivery site 62. In the individual delivery site 62, the work of delivering the cargo to a resident of the designated delivery destination is performed.

When the resident in the facility wants to send a cargo, he/she brings the cargo to be sent to the cargo receiving workspace 18 in the in-facility yard 63. At the cargo receiving workspace 63, the received cargos are delivered to the sorting workspace 61. In the sorting workspace 61, the received cargos are loaded onto containers and delivered to the sorting workspace 61. At the delivery workspace 64, the containers are handed over to the autonomous transport robot 30. Then, the autonomous transport robot 30 passes through the routes of the connection physical distribution paths 15 and the in-block physical distribution paths 16 and delivers the container loaded with the cargo to the receiving workspace 10 in the collection and physical distribution yard 50.

At the receiving workspace 50, the received containers are delivered to the sorting workspace 51. In the sorting workspace 51, containers received from the plurality of facilities 13 through the receiving workspace 50 are collectively delivered to the out-of-block delivery site 53. At the out-of-block delivery site 53, the containers received from the sorting workspace 51 are handed over to delivery vehicles operated in the distribution network outside the block.

In the physical distribution infrastructure structure 1 according to the first embodiment, the garbage discharged from the residents in the facility is collected at the delivery workspace 64, and collected by the autonomous transport robot 30, the connection physical distribution paths 15, and the in-block physical distribution paths 16 in the garbage collection site 54 provided in the collection and physical distribution yard 10. Then, the garbage collected in the garbage collection site 10 of the collection and physical distribution yard 54 is carried to the garbage disposal site.

As described above, in the physical distribution infrastructure structure 1 according to the first embodiment, the unit block 11, the in-block physical distribution paths 16 constructed around the unit blocks are connected to the collection and physical distribution yard 10 constructed at a place separate from the block by the connection physical distribution paths 15. Thus, the physical distribution infrastructure structure 1 can easily expand the town by expanding the town in such a way that the unit blocks are constructed in a continuous manner.

Further, in the physical distribution infrastructure structure 1 according to the first embodiment, even when the blocks are expanded to physically separated areas, by connecting the blocks by the connection physical distribution paths 15, the blocks sharing one physical distribution yard 10 can be easily expanded even to areas where the areas of the blocks are not continuous.

Further, in the physical distribution infrastructure structure 1 according to the first embodiment, since the in-block physical distribution paths 16 are formed along the outer periphery of the unit block 11, even when a large-scale construction such as reconstruction of the facility 13 in the unit block 11 is required, only the in-facility yard 18 related to the facility to be constructed is present underground, and the other in-block physical distribution paths 16 are not affected. As a result, in the physical distribution infrastructure structure 1 according to the first embodiment, large-scale construction such as renewal of facilities and constructions of new buidlings, etc. can be carried out easily. This facilitates the expansion and maintenance and management of the town.

Further, in the physical distribution infrastructure structure 1 according to the first embodiment, a part of the in-block physical distribution path 16 used in the adjacent unit block 11 is shared between the adjacent unit block 11 and the corresponding unit block 11. Thus, in the physical distribution infrastructure structure 1 according to the first embodiment, the town can be expanded while shortening the total extension of the in-block physical distribution paths 16, reducing the number of materials used, and shortening the construction period.

Further, the physical distribution infrastructure structure 1 according to the first embodiment has the in-block physical distribution paths 16 provided for the autonomous transport robots 30 that transport cargos to each facility in the block in a layer different from that for persons or general vehicles. Thus, the persons or general vehicles will not pass the same place at the same time as the autonomous transport robots 30 in the block, and the time when the autonomous transport robot 30 arrives at the facility 13 from the collection and physical distribution yard 10 can be easily predicted. That is, in the physical distribution infrastructure structure 1 according to the first embodiment, by providing the in-facility yard 18 in the facility in the unit block 11, it is possible to achieve efficient delivery of the cargos to the persons in the facility.

Further, in the physical distribution infrastructure structure 1 according to the first embodiment, pipe structure members such as a box culvert or the like manufactured by the precast method are combined to form pipe structured parts of the paths constituting the in-block physical distribution paths 16. In this manner, in the physical distribution infrastructure structure 1 according to the first embodiment, it is possible to achieve the easiness of parts procurement, the improvement of production efficiency, the improvement of construction efficiency, and the high expandability of the in-block physical distribution paths 16.

Further, in the physical distribution infrastructure structure 1 according to the first embodiment, infrastructure wiring, infrastructure piping, and the like are provided in the pipe structures constituting the in-block physical distribution paths 16. With such a structure, the in-block physical distribution paths 16 can be used not only as passages for the autonomous transport robots 30 but also for other purposes, and thus the construction time of the blocks can be shortened. In addition, by installing the infrastructure wiring and the infrastructure piping through the in-block physical distribution paths 16, the maintenance of the wiring and the piping becomes easier compared with the case where these are buried underground.

Further, in the physical distribution infrastructure structure 1 according to the first embodiment, it is also possible to allow not only the autonomous transport robots 30 to pass but also emergency vehicles that can autonomously drive to pass through the in-block physical distribution paths 16. By doing so, in the physical distribution infrastructure structure 1 according to the first embodiment, emergency measures can be promptly taken.

Furthermore, in the physical distribution infrastructure structure 1 according to the first embodiment, the traveling direction of the autonomous transport robots is restricted to one direction for the loop-shaped parts of the in-block physical distribution paths 16. Thus, in the physical distribution infrastructure structure 1 according to the first embodiment, it is possible to set the width of the in-block physical distribution paths 16 to the minimum width that allows one autonomous transport robot 30 to pass through. That is, with the physical distribution infrastructure structure 1 according to the first embodiment, it is possible to efficiently expand the town by reducing the width of the pipe structures or the roads constituting the in-block physical distribution paths 16.

Further, in the physical distribution infrastructure structure 1 according to the first embodiment, the direction in which the autonomous transport robots turn can be restricted to one of right and left. When all of the in-block physical distribution paths 16 form a loop shape, by applying such restriction, if the autonomous transport robots 30 travel to face each other, it is possible to prevent the lowering of the operation efficiency, such as making either one of the autonomous transport robots 30 perform a swerving action.

Further, in the physical distribution infrastructure structure 1 according to the first embodiment, the in-facility yards 18 are provided in the facility 13 at the end of the branch paths 17. Thus, in the physical distribution infrastructure structure 1 according to the first embodiment, the inefficiency can be prevented. The inefficnecy here is, for example, when the autonomous transport robot 30 enters and exits the in-facility yard 18 of the facility 13, it faces another autonomous transport robot 30, and thus the other autonomous transport robot 30 needs to perform a swerving action. Further, by providing the in-facility yard 18 for each facility 13, the efficiency of the delivery of a cargo to the individual delivery destination can be enhanced.

The in-facility yard 18 according to the first embodiment is provided in the same layer as layer for the branch paths 17 or in a layer different from the layer on which the branch paths 17 are provided. Thus, the flexibility of the layer on which the in-facility yards 18 are provided can enhance the degree of freedom in designing the facility 18 corresponding to the in-facility yard 13.

Further, in the physical distribution infrastructure structure 1 according to the first embodiment, at least one of the processing of receiving cargos from the autonomous transport robots in the in-facility yard 18 and the processing of delivering the cargos from the in-facility yards to the delivery destination in the facility is performed by the robots. This eliminates the need for persons required for sorting and delivering the cargos in the physical distribution infrastructure structure 1 according to the first embodiment, so that the delivery of the cargo can be made more efficient. Further, a collection and delivery locker can be transported by the autonomous transport robot 30 while the cargos to be carried by the autonomous transport robot 30 are stored in the collection and delivery locker stored in the shelf designated for each destination. By using such a collection and delivery locker, necessary sorting works can be reduced and the cargos can be delivered more efficiently.

### [Second embodiment]

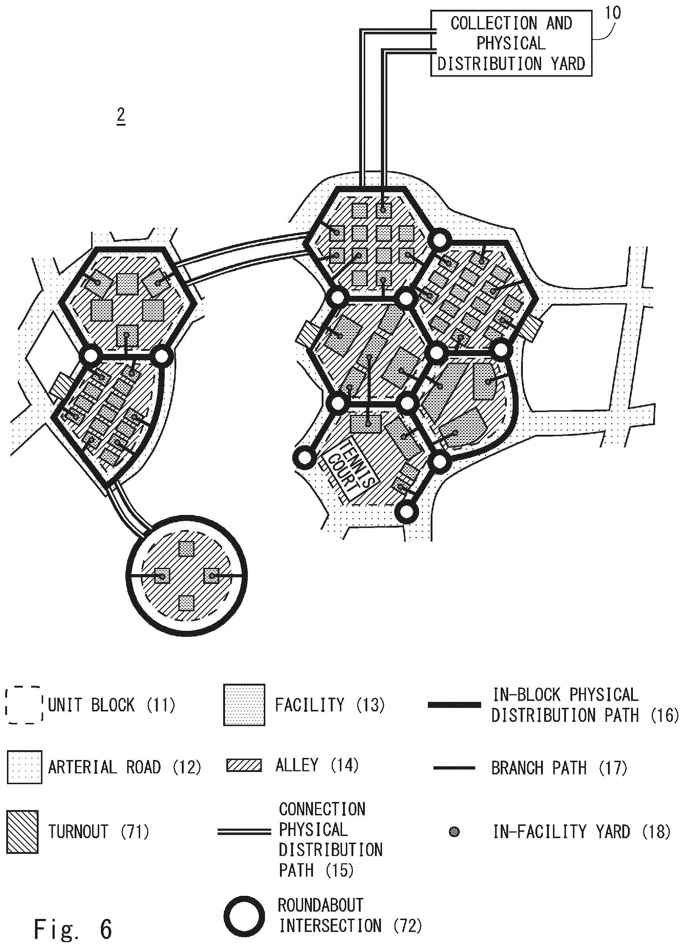

In a second embodiment, a physical distribution infrastructure structure 2 as another form of the physical distribution infrastructure structure 1 according to the first embodiment will be described. Fig. 6 is a schematic diagram of the physical distribution infrastructure structure 2 according to the second embodiment. In the description of the second embodiment, the same components as those described in the first embodiment are denoted by the same reference numerals as those in the first embodiment, and the description thereof is omitted.

As shown in Fig. 6, in the physical distribution infrastructure structure 2 according to the second embodiment, in the physical distribution infrastructure structure 1 according to the first embodiment, turnouts 71 are provided on the routes of the in-block physical distribution paths 16. The turnouts 71 are also provided near connection points between the connection physical distribution paths 15 and the in-block physical distribution paths 16.

Further, in the physical distribution infrastructure structure 2 according to the second embodiment, as intersections of the in-block physical distribution paths 16, runabout intersections 72 having an annular structure whose circumferential direction is restricted to one direction are provided. In the physical distribution infrastructure structure 2 according to the second embodiment, the runabout intersections 72 are provided at ends of routes which do not form a loop, i.e., at ends of the in-block physical distribution paths 16 where the routes become a deadend, from among the in-block physical distribution paths 16 in the block.

In the physical distribution infrastructure structure 2 according to the second embodiment, by providing the turnouts 71 at the connection points between the connection physical distribution paths 15 and the in-block physical distribution paths 16, even when the operation state of the connection physical distribution paths 15 indicates a congestion, the autonomous transport robot 30 temporarily swerves in the turnout 71. By doing so, the autonomous transport robot 30 can be prevented from stopping on the in-block physical distribution path 16 and obstructing the operation of other autonomous transport robots 30.

Further, in the second embodiment, by providing the turnouts 16 on the route of the in-block physical distribution paths 71, for example, when an emergency vehicle passes the in-block physical distribution paths 16, the autonomous transport robot 30 temporarily swerves to prevent the obstruction of the operation of the emergency vehicle.

In the physical distribution infrastructure structure 2 according to the second embodiment, the runabout intersections 72 are employed as intersections. In each of the runabout intersections 72, when the autonomous transport robot 30 arrives at a target passage while traveling around the annular route in one direction, the autonomous transport robot 30 comes out of the runabout intersection 72. By providing the runabout intersections 72, the intersections function as a waiting place, and thus the congestion of the in-block physical distribution paths 16 can be eased. In addition, by providing one of the runabout intersections 72 at the end of each of the in-block physical distribution paths 16, which are deadends, it is possible to prevent the lowering of the operation efficiency, such as when the autonomous transport robots 30 face each other and one of them performs a swerving action on the in-block physical distribution path 16.

### [Third embodiment]

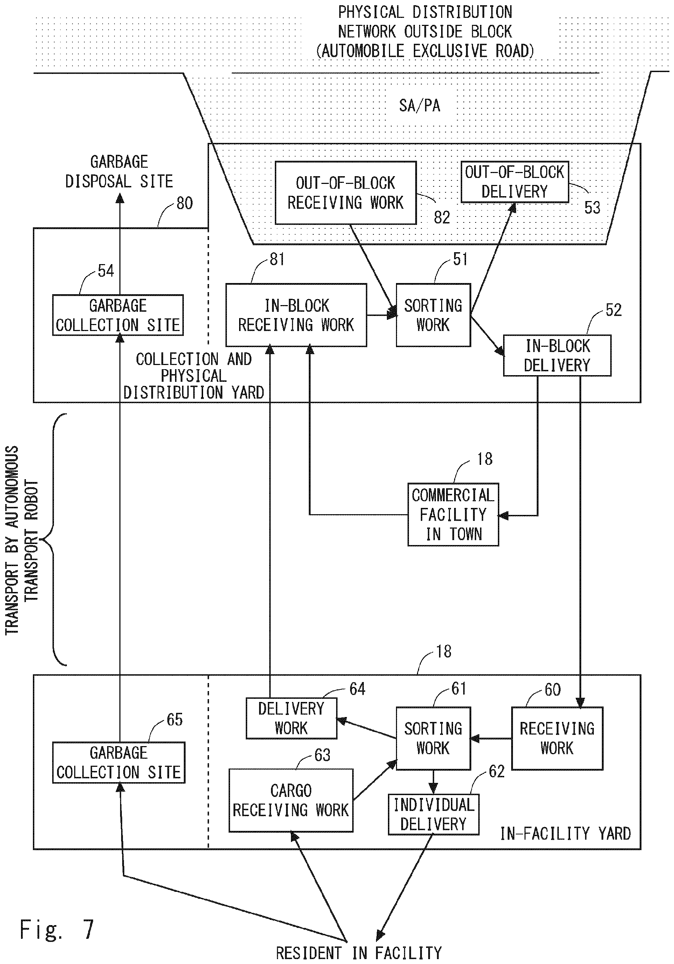

In a third embodiment, a collection and physical distribution yard 80, which is another form of the collection and physical distribution yard 10 according to the first embodiment, will be described. Fig. 7 is a schematic diagram of the collection and physical distribution yard according to the third embodiment. In the description of the third embodiment, the same components as those described in the first embodiment are denoted by the same reference numerals as those in the first embodiment, and the description thereof is omitted.

As shown in Fig. 7, in the collection and physical distribution yard 80 according to the third embodiment, an out-of-block receiving workspace 82 and an out-of-block delivery site 53 for handing over cargos to and receiving cargos from outside the block are provided in such a way that they are brought into contact with automobile exclusive roads. In addition, an in-block receiving workspace 81 is provided outside the automobile exclusive road. Here, it is preferable that some of the collection and physical distribution yards 80 are provided in service areas SA or parking areas PA provided on automobile exclusive roads so as to facilitate the parking of the cargo transport vehicles when the cargos are handed over to and received from outside the block.

As described above, by using the collection and physical distribution yard 80 capable of handing over cargos to and receiving cargos from outside the block on the exclusive automobile road, it is not necessary for the cargo transport vehicle that is responsible for physical distribution of cargo outside the block to unload the cargos on the automobile exclusive road. This enhances the efficiency of the physical distribution of the cargos while easing congestion on local roads.

This configuration can be achieved, because the collection and physical distribution yard 80 is located at a place different from a place where the blocks are present, and because the connection physical distribution paths 15 connecting the collection and physical distribution yard 80 to the in-block physical distribution paths 16 is used.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A physical distribution infrastructure structure comprising:
a collection and physical distribution yard (10) configured to collect and distribute a cargo exchanged between outside and within a block;
at least one unit block (11);
an in-block physical distribution path (16) provided to surround a periphery of the unit block (11) in a loop shape, an autonomous transport robot (30) for transporting the cargo by an autonomous operation passing through the in-block phyisical distribution path, and at least a part of the in-block physical distribution path being provided at a part in a layer different from a layer for a sidewalk or a roadway;
a branch path (17) configured to be accessible to a facility (13) facing an outer periphery of the unit block (11); and
a connection physical distribution path (15) configured to connect the collection and physical distribution yard (10) to the in-block physical distribution path (16).

2. The physical distribution infrastructure structure according to Claim 1, wherein
a residence of a person designated as a destination of the cargo belongs to the facility (13).

3. The physical distribution infrastructure structure according to Claim 1 or 2, wherein
the in-block physical distribution path (16) is provided in a layer that is above or below a layer for an arterial road provided along an outer periphery of the unit block (11).

4. The physical distribution infrastructure structure according to any one of Claims 1 to 3, wherein
the in-block physical distribution path (16) is formed by combining a plurality of pipe materials having the same structure formed based on a predetermined standard by a precast method.

5. The physical distribution infrastructure structure according to any one of Claims 1 to 4, wherein
the in-block physical distribution path (16) includes a pipe structure, and the pipe structure is provided with a passage for the autonomous transport robot (30) and infrastructure piping used in the block.

6. The physical distribution infrastructure structure according to any one of Claims 1 to 5, wherein
a passage allowance is given only to the autonomous transport robot (30) and another self-driving vehicle which is specially allowed to pass in the in-block physical distribution path (16).

7. The physical distribution infrastructure structure according to any one of Claims 1 to 6, wherein
a turnout for the autonomous transport robot (30) to temporarily swerve on a route is provided on at least one of the in-block physical distribution path (16) and a connection point between the in-block physical distribution path (16) and the connection physical distribution path (15).

8. The physical distribution infrastructure structure according to any one of Claims 1 to 7, wherein
a part of the in-block physical distribution path (16) used in the adjacent unit blocks (11) is shared between the adjacent unit blocks (11).

9. The physical distribution infrastructure structure according to any one of Claims 1 to 8, wherein
the traveling direction of the autonomous transport robot (30) is restricted to one direction in the loop-shaped part of the in-block physical distribution path (16).

10. The physical distribution infrastructure structure according to any one of Claims 1 to 9, wherein
a direction in which the autonomous transport robot (30) turns is restricted to one of right and left in the in-block physical distribution path (16).

11. The physical distribution infrastructure structure according to any one of Caims 1 to 10, wherein
an intersection of the in-block physical distribution paths (16) is formed of a runabout including an annular structure in which a circumferential direction is restricted to one direction.

12. The physical distribution infrastructure structure according to any one of Claims 1 to 11, wherein
an in-facility yard provided so as to correspond to the facility is provided at an end point of the branch path (17).

13. The physical distribution infrastructure structure according to any one of Claims 1 to 12, wherein
the connection physical distribution path (15) comprises:
a first connection physical distribution path (15a) through which the autonomous transport robot (30) passes from the collection and physical distribution yard (10) toward the in-block physical distribution path (16); and
a second connection physical distribution path (15b) through which the autonomous transport robot (30) passes from the in-block physical distribution path (16) toward the collection and physical distribution yard (10).

14. The physical distribution infrastructure structure according to any one of Claims 1 to 13, wherein
at least a part of the collection and physical distribution yard (10) is provided as a facility (13) on an automobile exclusive road.

15. A physical distribution infrastructure structure comprising:
a collection and physical distribution yard (10) configured to collect and distribute a cargo exchanged between outside and within a block;
at least one unit block (11);
an in-block physical distribution path (16) provided to be in contact with at least one side of the unit block (11), an autonomous transport robot (30) for transporting the cargo by an autonomous operation passing through the in-block phyisical distribution path, and at least a part of the in-block physical distribution path (16) being provided at a part in a layer different from a layer for a sidewalk or a roadway;
a branch path (17) configured to be accessible to a facility (13) facing an outer periphery of the unit block (11); and
a connection physical distribution path (15) configured to connect the collection and physical distribution yard (10) to the in-block physical distribution path (16).
